(19) Europäisches Patentamt
European Patent Office
Office européen des brevets

(11) Numéro de publication : 0 373 999 B1

(12) # FASCICULE DE BREVET EUROPEEN

(45) Date de publication du fascicule du brevet : **26.05.93 Bulletin 93/21**

(51) Int. Cl.$^5$ : **C08F 4/609,** C08F 10/02

(21) Numéro de dépôt : **89403352.1**

(22) Date de dépôt : **04.12.89**

(54) **Procédé de polymérisation en phase gazeuse de l'éthylène permettant la fabrication de polyéthylène linéaire de distribution étroite de masse moléculaire.**

Le dossier contient des informations techniques présentées postérieurement au dépôt de la demande et ne figurant pas dans le présent fascicule.

(30) Priorité : **14.12.88 FR 8816470**

(43) Date de publication de la demande : **20.06.90 Bulletin 90/25**

(45) Mention de la délivrance du brevet : **26.05.93 Bulletin 93/21**

(84) Etats contractants désignés : **AT BE DE ES FR GB IT NL SE**

(56) Documents cités :
**EP-A- 0 177 841**
**EP-A- 0 197 311**
**DE-A- 3 633 131**

(73) Titulaire : **ELF ATOCHEM S.A.**
**4 & 8, Cours Michelet La Défense 10**
**F-92800 Puteaux (FR)**

(72) Inventeur : **Spitz, Roger**
**44, Rue des Fleurs**
**Serezin F-69360 St-Symphorien D'Ozon (FR)**
Inventeur : **Brun, Claude**
**Clos St Pierre**
**F-64320 Idron (FR)**
Inventeur : **Joly, Jean-François**
**110, Rue Pierre Brossolette**
**F-92320 Chatillon Sous Bagneux (FR)**

(74) Mandataire : **Foiret, Claude et al**
**ELF ATOCHEM S.A. Département Propriété Industrielle La Défense 10 - Cedex 42**
**F-92091 Paris-La-Défense (FR)**

EP 0 373 999 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne un procédé de polymérisation de l'éthylène permettant d'obtenir un polyéthylène linéaire de distribution étroite de masse moléculaire. Il est entendu que dans le terme de polymérisation est incluse la copolymérisation de l'éthylène avec une alpha oléfine, l'éthylène demeurant l'élément majeur de façon à fabriquer un polyéthyléne linéaire. Habituellement dans la fabrication des polyéthylènes linéaires, l'éthylène représente au minimum 70 % en poids de la totalité des monomères mis en oeuvre.

Le procédé selon l'invention consiste à polymériser l'éthylène en phase gazeuse en présence d'une composante catalytique contenant au moins un métal de transition, du magnésium et un halogène, et, d'un cocatalyseur composé d'un alkylaluminium et d'un donneur d'électrons, la caractéristique du donneur d'électrons étant d'être choisi parmi les monoéthers.

Dans la polymérisation du propylène il est connu d'associer nécessairement un donneur d'électrons au cocatalyseur de la composante catalytique de type halogénure de titane sur support comportant du magnésium. Cette association est indispensable pour obtenir l'isotacticité ou la stéréorégularité dans la polymérisation du propylène. Dans ce cas la présence du donneur d'électrons facilite l'obtention de la bonne orientation des branchements $-CH_3$ de la chaine.

Le donneur d'électrons présent, s'il permet une amélioration de la stéréorégularité, est connu comme poison du catalyseur en ce qu'il nuit généralement à la productivité dudit catalyseur en la diminuant très sensiblement. En conséquence dans le cas de la polymérisation du propylène, il s'agit de trouver un compromis dans l'ajout du donneur d'électrons : suffisamment pour obtenir une bonne stéréorégularité, mais pas trop pour obtenir une productivité raisonnable du catalyseur. Cela ressort d'ailleurs du US-A 4 511 703, un des nombreux brevets relatif aux catalyseurs Ziegler de polymérisation du propylène oû il est fait état de donneur d'électrons. Parmi ces brevets on peut citer les US-A 4 535 069, 4 304 891, 4 387 198, 4 287 328, 4 363 901, 4 473 660 dans lesquels on ne se préoccupe que de la polymérisation ou copolymérisation du propylène et de la stéréorégularité du polymère.

Cette question de stéréorégularité ne se pose pas dans le cas de la polymérisation de l'éthylène ou des mélanges dans lesquels il se trouve en excès. En conséquence l'emploi de donneur d'électrons, qui ne peut qu'agir négativement en réduisant la productivité ou l'activité du catalyseur ou encore introduisant des problèmes d'odeur n'est fait que très sélectivement dans des buts précis en association avec le cocatalyseur de polymérisation de l'éthylène. De façon habituelle, comme par exemple dans le US-A 4 497 904, l'éthylène est polymérisé en présence d'une composante catalytique à base de titane et d'un alkylaluminium comme cocatalyseur, ce dernier étant exempt de donneur d'électrons.

Dans le EP-A 232 643 l'emploi de donneur d'électrons associé au cocatalyseur permet de conserver la structure sphérique d'une composante catalytique sphérique entrant dans la composition d'un catalyseur sphérique stable de polymérisation de l'éthylène. Dans cette application, la plupart des donneurs d'électrons connus conviennent pour obtenir le résultat souhaité.

Afin de fabriquer des polyéthylènes possédant une densité apparente élevée avec une bonne productivité catalytique il est recommandé dans le FR-A 2 531 717 d'associer au cocatalyseur et à la composante catalytique à base de titane un donneur d'électrons de la famille des silanes. Ces produits présentent l'inconvénient de subir des réactions de dégradation en présence d'alkylaluminium, comme indiqué par E. VAHASARJA et al., Journal of Polymer Science 25, 3241 (1987).

Dans le même but il est proposé dans le EP-A 155 682 d'associer aux systèmes catalytiques de polymérisation de l'éthylène un donneur d'électrons contenant dans sa molécule au moins un atome d'azote. Ce type de donneur d'électrons présente cependant l'inconvénient de provoquer des problèmes d'odeur et/ou de toxicité résiduelle dans le polymère.

Dans le DE-A 3 633 131 est décrit un catalyseur de copolymérisation de mélange d'oléfines contenant au moins de l'éthylène. La copolymérisation s'effectue indifféremment en phase gazeuse ou en suspension. Le catalyseur est constitué d'une composante catalytique à base de titane et d'un cocatalyseur contenant un donneur d'électrons choisi indifféremment parmi les composés $R_1$-0-$R_2$ de la famille des éthers, des ester ou des siloxanes. Le but de ce catalyseur est de réduire le taux de matières solubles dans le copolymère final. De ce document, il n'est pas possible de définir le procédé de polymérisation permettant de réaliser un polyéthylène linéaire de distribution étroite de masse moléculaire.

Le EP-A 0 177 841, orienté vers la stéréospécificité déjà citée, concerne un procédé de production de polyoléfine caractérisé en ce qu'un cocatalyseur est associé à un donneur d'électrons du type éther possédant un groupement aromatique ou alycyclique lié à un carbone quaternaire du type $\emptyset$-$CR_x(OR_2)_y$.

Le EP-A 0 197 311 concerne un procédé de polymérisation d'éthylène et d'alphaoléfine sous haute pression en masse dans lequel le polymère se trouve à l'état fondu et les monomères à l'état hypercritique.

Selon la présente invention a été mise en évidence une famille de donneurs d'électrons qui, associés au

système catalytique Ziegler, à base au moins de métal de transition et de magnésium, de polymérisation en phase gazeuse de l'éthylène, permet, tout en conservant sensiblement la productivité du catalyseur, de fabriquer un polyéthehylène linéaire, utilisable même pour les applications alimentaires, de distribution éroite de masse moléculaire. Le donneur d'électrons est choisi dans la famille des monoéthers. Ces monoéthers peuvent être illustrés par la formule R'OR", R' et R" étant des radicaux hydrocarbonés linéaires ou ramifiés, de préférence saturés, identiques ou différents, contenant de 1 à 8 atomes de carbone. Ils peuvent également être cycliques, l'oxygène formant un cycle comportant au moins 4 atomes de carbone et 12 au plus ; il n'est pas exclu que certains atomes de carbone du cycle soient liés à des radicaux hydrocarbonés substituants, le nombre d'atomes de carbone total, dans ce cas, de l'éther cyclique ne dépassant pas 16. Dans la famille des monoéthers objet de l'invention, on peut citer le diéthyle éther, le n-dibutyléther, le s-dibutyléther, les dioctyléthers, le tétrahydrofuranne, le tétrahydropyranne, le 2 méthyltétrahydrofuranne, le 3 méthyltétrahydropyranne.

Il est inattendu de constater que dans la famille des éthers comme donneurs d'électrons seuls les monoéthers permettent dans le cas de la polymérisation de l'éthylène en phase gazeuse de fabriquer un polyéthylène linéaire de distribution étroite de masse moléculaire, la productivité du catalyseur étant parallèlement sensiblement conservée.

Par polyéthylène linéaire, on entend non seulement le polyéthylène haute densité obtenu par homopolymérisation de l'éthylène, mais également les copolymères de densité supérieure à 880 g/l, de l'éthylène et d'au moins une alpha oléfine telle que le polypropylène, le butène-1, l'hexène-1, le méthyl 4-pentène-1. Les polymères de distribution de masses moléculaires étroites possèdent en moyenne une polydispersité de 3 à 7 environ, la polydispersité étant le rapport de la masse moléculaire en poids sur la masse moléculaire en nombre. Ces polymères à forte fluidité possèdent une rapport d'indice de fluidité $MFR_{5-2}$ inférieur à 3,3, ce $MFR_{5-2}$ étant le rapport $MI_5/MI_2$ de l'indice de fluidité sous 5 kg sur l'indice de fluidité sous 2,16 kg selon la norme ASTM D 1238 ; le $MFR_{21-5}$ rapport des indices de fluidité sous 21,6 kg sur l'indice de fluidité sous 5 kg, $MI_{21}/MI_5$ est inférieur à 10, le rapport $MI_{21}/MI_2$ des indices de fluidité sous 21,6 kg et 2,16 kg selon la norme ASTM D 1238, étant inférieur à 32.

La polymérisation de l'éthylène en phase gazeuse, en présence d'hydrogène et éventuellement de gaz inerte peut être effectuée dans tout réacteur permettant une polymérisation en phase gazeuse et en particulier dans un réacteur à lit agité ou à lit fluidisé. Les conditions de mise en oeuvre sont connues de l'art antérieur. On opère généralement à une température inférieure au point de fusion Tf du polymère ou copolymère à synthétiser et plus particulièrement entre 20° et (Tf-5°C) et sous une pression telle que l'éthylène et éventuellement les autres monomères hydrocarbonés présents dans le réacteur soient essentiellement en phase vapeur.

Dans ce procédé l'oléfine est initialement mise directement en contact dans le réacteur avec le système catalytique constitué de la composante catalytique, de cocatalyseur et du monoéther tel que défini précédemment.

La composante catalytique de type Ziegler est connue en elle-même. Elle est habituellement le résultat de la combinaison d'au moins un composé de métal de transition, un composé du magnésium, un halogène et éventuellement un donneur ou accepteur d'électrons et de tout autre composé utilisable dans ce type de catalyseur. Le composé de métal de transition est généralement choisi parmi les composés de formule $Me(OR)_nX_{m-n}$ dans laquelle

Me est la vanadium, le chrome et plus particulièrement le titane

X est le brome, l'iode et plus particulièrement le chlore

R est un radical hydrocarboné aliphatique ou aromatique de $C_1$ à $C_{14}$ ou $COR_1$ avec $R_1$ un radical hydrocarboné aliphatique ou aromatique de $C_1$ à $C_{14}$

"m" correspond à la valence du métal de transition et "n" est une valeur inférieure ou égale à "m".

Le composé de métal de transition particulièrement recommandé est choisi parmi les composés du titane de formule $Ti(OR)_x Cl_{4-x}$, R étant défini ci-dessus, x étant un nombre de 0 et 4.

Le composé de magnésium est habituellement choisi parmi les composés de formule $Mg(OR)_nX_{2-n}$ dans laquelle X est le brome, l'iode et plus particulièrement le chlore, R est l'hydrogène ou un radical alkyl ou cycloalkyl et "n" est inférieur ou égal à 2.

Le donneur ou accepteur d'électrons est un composé organique liquide ou solide connu pour entrer dans la composition de ces catalyseurs. Le donneur d'électrons peut être un composé mono ou polyfonctionnel avantageusement choisi parmi les acides carboxyliques aliphatiques ou aromatiques et leurs esters alcoyliques, les éthers aliphatiques ou cycliques, les cétones, les esters vinyliques, les dérivés acryliques, en particulier acrylates ou méthacrylates d'alcoyle, et les silanes. Conviennent notamment comme donneurs d'électrons les composés tels que paratoluate de méthyle, benzoate d'éthyle, acétate d'éthyle ou de butyle, éther éthylique,

para-anisate d'éthyle, dibutylphtalate, dioctylphtalate, diisobutylphtalate, tétrahydrofuranne, dioxane, acétone, méthylisobutylcétone, acétate de vinyle, méthacrylate de méthyle, et les silanes tels que phényltriéthoxysilane et cyclohexylméthyldiméthoxysilane, les alcoxysilanes aromatiques ou aliphatiques.

L'accepteur d'électrons est un acide de Lewis, choisi de préférence parmi les chlorure d'aluminium, le trifluorure de bore, le chloranile ou encore les alcoylaluminiums et alcoylmagnésiums.

Le cocatalyseur comme déjà signalé est choisi parmi les alkyl-aluminiums. Parmi ces produits peuvent être cités les composés de formule $Al\ (R_2)_c X'_d H_e$ dans laquelle

X' est Cl,

$R_2$, représente un radical hydrocarboné saturé de $C_1$ à $C_{14}$ ou ($OR_3$),

$R_3$ étant un radical hydrocarboné saturé de $C_1$ à $C_{14}$

avec : $0 \leqq d \leqq 1{,}5$ ; $0 \leqq e \leqq 1$ et $c + d + e = 3$

Comme exemples, on peut citer : $Al(C_2H_5)_3$, $Al(C_2H_5)_2Cl$, $Al(C_4H_9)_3$, $Al_2(C_2H_5)_3Cl_3$, $Al(C_4H_9)_2H$, $Al(C_6H_{13})_3$, $Al(C_8H_{17})_3$, $Al(C_2H_5)_2H$ et $Al(C_2H_5)_2(OC_2H_5)$. Peuvent encore être cités les aluminoxanes et les aluminosiloxanes.

Le monoéther objet de l'invention est ajouté à la composante catalytique et au cocatalyseur au plus tard au début de la réaction de polymérisation. En tout état de cause le monoéther ne doit pas être mis en contact avec le composante catalytique sans la présence du cocatalyseur dans le milieu. De façon préférentielle, sachant que le monoéther ne réagit pas avec l'alkylaluminium par échange de groupements réactifs, mais forme avec ce dernier un complexe d'association, il est recommandé, préablement à la mise en contact du cocatalyseur avec la composante catalytique de former le complexe par mélange de cocatalyeur et du monoéther.

La polymérisation en phase gazeuse peut s'effectuer en deux étapes. Dans une première étape il est possible de consolider le système catalytique en effectuant une prépolymérisation à base d'éthylène en présence des constituants du système catalytique, puis en poursuivant, dans une second étape, la polymérisation en phase gazeuse par ajout d'éthylène ou d'un mélange d'éthylène et d'alpha oléfine tel que déjà cité. Dans ce cas le monoéther est, comme précédemment, de préférence ajouté en complexe avec le cocatalyseur et au plus tard en fin d'étape de prépolymérisation, cette étape ne représentant une formation de polymère ne dépassant pas 10 % en poids du polymère total devant être formé. Cette étape de prépolymérisation est de préférence effectuée en phase gazeuse, mais il n'est pas exclu de l'exécuter en suspension en présence d'un diluant hydrocarboné ou en combinaison de phase gazeuse et de suspension, l'étape finale de polymérisation s'effectuant bien entendu en phase gazeuse.

La quantité de monoéther mise en oeuvre est définie par le rapport entre le nombre de moles de monoéther et le nombre de moles de cocatalyseur compté en atomes/gramme d'aluminium. Le rapport éther/Al est généralement compris entre 1 et 1/100 et de préférence entre 1/10 et 1/60.

Les exemples suivants illustrent l'invention sans toutefois la limiter.

## EXEMPLE 1

### a) Synthèse de la composante catalytique

10 g. de $MgCl_2$ anhydre sont broyés 6 h sous atmosphère inerte, on ajoute d'abord 1,8 ml de dibutylphtalate et on cobroie 2 h, puis 0,7 ml de $TiCl_4$ est ensuite additionné et on cobroie 4 h.

Le solide est extrait du bol de broyage par siphonage avec de l'heptane sec puis décanté et séché sous vide d'environ 1 Pa à température ambiante. Le solide obtenu est traité par 50 ml de $TiCl_4$ pur à 80°C pendant deux heures.

Le solide est décanté et abondamment lavé avec de l'heptane sec, après séchage sous vide à température ambiante on obtient la composante catalytique A qui contient 4,4 % de titane en poids.

### b) Polymérisation en phase vapeur

On copolymérise, en phase gazeuse, l'éthylène et le butène, dans un réacteur inox thermostaté de 2,5 l. muni d'une agitation par pale.

Dans le réacteur sec, contenant une charge initiale de 15 g. de polyéthylène provenant d'un essai précédent fait dans les mêmes conditions, la vitesse d'agitation étant de 250 tours/minute, et la température de 80°C, sont introduits dans l'ordre sous débit d'argon 1 mM de trihexylaluminium complexé avec 1/20 mM de l'éther monofonctionnel choisi. Le réacteur est mis brièvement sous vide et sont ajoutés 1,7 bar de butène, 8,3 bars d'éthylène et 2 bars d'hydrogène. La température est portée à 85°C. La composante catalytique A, en quantité correspondant à 0,66 mg de titane est introduite dans le réacteur. La pression totale de 12 bar est maintenue constante par addition continue d'un mélange éthylène-butène à la composition indiquée pour chacun des essais. La durée de la polymérisation est de 1 heure, le réacteur est alors refroidi à 25°C et dégazé. On en extrait une poudre régulière de polymère, les parois du réacteur ne sont pas collantes.

A titre comparatif on répète l'essai en absence d'éther, avec la composante catalytique A.

| ESSAI | ETHER | $C_2H_5$/1000C Nombre de branches $C_2H_5$ pour 1000 carbones | PRODUCTIVITE grammes de polymère par gramme de composante catalytique | $MI_2$ | $MI_{21}/MI_2$ |
|---|---|---|---|---|---|
| 1 | $TH_F$ (a) | 23,4 | 4 700 | 0,7 | 22 |
| 2 | $C_4H_9OC_4H_9$ (b) | 18,9 | 4 600 | 1,5 | 24 |
| 3 comparatif | — | 22,8 | 5 850 | 1,6 | 29 |

a) tétrahydrofuranne
b) n-dibutyléther

EXEMPLE 2

On polymérise l'éthylène dans le même réacteur que pour l'exemple 1. Dans le réacteur sec contenant 15 g d'une charge de polyéthylène, provenant d'un essai précédent fait dans les mêmes conditions, agité à 250 tours/minute à 85°C sont introduits dans l'ordre sous débit d'argon 1 mM de trihexylaluminium complexé avec 1/20 de mM de l'éther monofonctionnel choisi. Le réacteur est mis brièvement sous vide et sont ajoutés 10 bars d'éthylène puis 5 bars d'hydrogène. La température est portée à 95°C. La composante catalytique A est ajoutée en quantité correspondant à 1,1 mg de titane. La pression totale est maintenue constante par addition continue d'éthylène. La durée de polymérisation est de 1 heure. Le réacteur est alors refroidi à 25°C et dégazé. On en extrait une poudre régulière de polymère. Le tableau suivant donne les caractéristiques de productivité des essais réalisés avec différents éthers.

L'essai 1 sans éther est donné à titre comparatif.

L'essai 2 effectué avec un éther difonctionnel est donné à titre comparatif.

L'essai 3 effectué avec un éther trifonctionnel est donné à titre comparatif.

Les polymères sont caractérisés par le grade mesuré à 190°C 2,16 kg et le rapport entre les grades mesurés à 5 et à 2,16 kg.

| ESSAI | | ETHER | PRODUCTIVITE grammes de polymère par gramme de catalyseur | $MI_{2,16}$ | $MI_5/MI_{2,16}$ |
|---|---|---|---|---|---|
| | | n-butyléther | 3 900 | 2,2 | 2,6 |
| | | sec-dibutyléther | 3 600 | 2,1 | 2,6 |
| | | dioctyléther | 3 800 | 2,5 | 2,7 |
| | | tétrahydrofuranne | 4 000 | 2,2 | 2,55 |
| ESSAIS COMPARATIFS | 1 | néant | 3 300 | 2,7 | 3 |
| | 2 | 2,2diméthoxypropane | 3 400 | 2,5 | 2,8 |
| | 3 | diglyme | 2 100 | 2,6 | 2,8 |

EXEMPLE 3

Synthèse de la composante catalytique

Dans un réacteur agité préalablement séché et purgé à l'azote on introduit :

. 400 ml de mélange butyloctylmagnésium (BOMAG)/tétraisobutylaluminoxane (TIBAO) à 44 % dans l'heptane soit
0,72 Mole de BOMAG 0,23 Mole de TIBAO
. 0,06 Mole d'éther diisoamylique.

La température est montée à 50°C et l'agitation réglée à 750 tours/minute. On injecte alors en 2 heures en mélange :

. 1,8 Mole de chlorure de tertiobutyle (TBuCl)
. 0,54 Mole d'éther diisoamylique

L'addition terminée on laisse la réaction se poursuivre 1h30 à 50°C. Le précipité formé est alors décanté et filtré. On procède à 3 lavages par 400cc d'hexane. Après élimination de l'hexane on obtient un précipité de morphologie sphérique.

10 g de précipité sont remis en suspension dans 70 cc d'hexane sec.

On procède à un barbottage d'HCl gazeux (0,5 mole) de 30 min. à 20°C puis à une filtration. Le précipité est lavé et essoré par deux fois avec 70cc d'hexane. Le précipité est remis en suspension dans 50 ml de $TiCl_4$ pur et agité 3 heures à 90°C. L'excès de $TiCl_4$ est éliminé par filtration. Le solide est alors lavé à l'hexane jusqu'à absence de $TiCl_4$ dans le filtrat. Il est alors séché par entrainement à l'azote. On obtient une composante catalytique de forme sphérique ayant la composition suivante :

| | |
|---|---|
| Ti 1,6 % | Cl 67,4 % |
| Mg 21,8 % | Al 250 ppm |

Synthèse des prépolymères

Essai 1 :

Dans un réacteur agité de 1,5 litre préalablement séché et maintenu à 40°C on introduit successivement :

. 0,8 l d'hexane
. 13,6 mM de trihexylaluminium (THA) pur
. 1 g de la composante catalytique décrite précédemment
. 3 bars d'hydrogène

On introduit 88 Nl d'éthylène en 4H40 en montant progressivement le débit d'éthylène de la valeur initiale de 1,2 Nl/h à la valeur de 48 Nl/h.

L'introduction d'éthylène terminée on élimine le solvant par entrainement à 60°C sous azote.

On recueille 111 g de composante catalytique sous forme de prépolymère sec de forme sphérique.

Essai 2 :

On reprend les conditions de l'essai 1 sauf que le THA est remplacé par un complexe THA/dibutyléther (DBE) dans un rapport molaire de 20.

On recueille 112,6 g de composante catalytique sous forme de prépolymère sec de forme sphérique.

Synthèse des homopolymères (PEHD)

On opère dans un réacteur de 8,2 litres préalablement séché en présence de 10 g. de poudre de polyéthylène comme charge dispersante. Dans ce réacteur maintenu pendant toute la polymérisation à 90°C on injecte sous agitation de 400 t/min. sous vide de 1,33 Pa de l'hydrogène jusqu'à l'obtention d'une pression de 1 bar absolu. On complète l'injection de l'hydrogène jusqu'à une montée de la pression à 5 bars absolus. On injecte ensuite dans le réacteur 8 bars d'éthylène jusqu'à l'obtention des pressions partielles d'hydrogène et d'éthylène respectives de 6 et 8 bars. Après ces injections on introduit 5 g. de prépolymère actif contenant la composante catalytique par poussée d'azote, l'injection d'azote étant poursuivie jusqu'à ce que la pression totale à l'intérieur du réacteur atteigne 21 bars. La pression est maintenue à cette valeur dans le réacteur par injection d'éthylène. Après 2 heures de réaction la polymérisation est arrêtée par décompression du réacteur. On purge à l'azote et on laisse refroidir.

Les résultats obtenus sont donnés dans les tableaux suivants :

| ESSAI | ETHER | $MI_2$ | $MI_5/MI_2$ | POLYMOLECULARITE |
|---|---|---|---|---|
| 1 | néant | 12,8 | 3,4 | 11,1 |
| 2 | DBE | 5,95 | 3,05 | 7 |

| ESSAI | POIDS DE PREPOLYMERE | PRODUCTIVITE EN GRAMMES PE/GRAMMES DE CATALYSEUR | DENSITE APPARENTE (MVA) | dp50 |
|---|---|---|---|---|
| 1 | 5 g. | 6 504 | 0,494 | 415 µ |
| 2 | 5 g. | 6 306 | 0,501 | 345 µ |

Synthèse des copolymères (LLDPE)

On opère dans un réacteur de 8,2 litres préalablement séché en présence de 10 g. de poudre de polyéthylène comme charge dispersante. Dans ce réacteur maintenu pendant toute la polymérisation à 85°C on injecte sous agitation de 400 t/min. sous vide de 1,33 pa du butène-1 jusqu'à l'obtention d'une pression de 1 bar absolu. On complète l'injection du butène-1 jusqu'à une montée de la pression à 2 bars absolus. On injecte ensuite successivement dans le réacteur 2 bars d'hydrogène et 9 bars d'éthylène jusqu'à l'obtention des pressions partielles d'hydrogène et d'éthylène respectives de 2 et 9 bars. Après ces injections on introduit 5 g. de prépolymère actif contenant la composante catalytique par poussée d'azote, l'injection d'azote étant poursuivie jusqu'à ce que la pression totale à l'intérieur du réacteur atteigne 21 bars. La pression est maintenue à cette valeur dans le réacteur par injection de mélange butène-1-éthylène dans un rapport molaire de 0,0466. Après 2 heures de réaction la polymérisation est arrêtée par décompression du réacteur. On purge à l'azote et on laisse refroidir.

Les résultats obtenus sont donnés dans les tableaux suivants :

| ESSAI | ETHER | $C_2H_5$/1000C | $MI_2$ | $MI_{21}/MI_2$ |
|---|---|---|---|---|
| 1 | néant | 18,9 | 2,5 | 33,1 |
| 2 | DBE | 18,5 | 1,27 | 31 |

| ESSAI | POIDS DE PREPOLYMERE | PRODUCTIVITE EN GRAMMES PE/GRAMMES DE CATALYSEUR | DENSITE APPARENTE (MVA) | dp50 |
|---|---|---|---|---|
| 1 | 5 | 10 500 | 0,473 | 503 |
| 2 | 5 | 12 700 | 0,475 | 656 |

## Revendications

1. Procédé de polymérisation de l'éthylène à une température inférieure au point de fusion du polymère ou du copolymère à synthétiser permettant la fabrication de polyéthylène linéaire de distribution étroite de masse moléculaire en présence d'un catalyseur formé d'une composante catalytique contenant au moins un métal de transition, du magnésium, un halogène et éventuellement un donneur ou accepteur d'électrons, et, d'un cocatalyseur composé d'un alkylaluminium et d'un donneur d'électrons caractérisé en ce que la polymérisation s'effectue en phase gazeuse et en ce que le donneur d'électrons est choisi dans la famille des monoéthers de formule R'OR", R' et R" étant des radicaux hydrocarbonés saturés, linéaires ou ramifiés, contenant de 1 à 8 atomes de carbone, ou encore des monoéthers cycliques, l'oxygène formant un cycle comportant de 4 à 12 atomes de carbone.

2. Procédé selon la revendication 1 caractérisé en ce que des radicaux hydrocarbonés sont substitués sur le cycle, le nombre total d'atomes de carbone de l'éther cyclique ne dépassant pas 16.

3. Procédé selon l'une des revendications 1 ou 2 caractérisé en ce que la quantité de monoéther mise en oeuvre est définie par le rapport molaire éther/aluminium du cocatalyseur compris entre 1 et 1/100.

## Patentansprüche

1. Verfahren zur Polymerisation von Ethylen bei einer Temperatur unterhalb des Schmelzpunkts des polymeren oder des zu synthe tisierenden Copolymeren, welches die Herstellung von linearem Polyethylen mit enger Molmassenverteilung erlaubt, in Gegenwart eines Katalysators, der aus einer katalytischen Verbindung gebildet wird, die zumindestens ein Übergangsmetall Magnesium, ein Halogen und eventuell einen Elektronendonator oder -akzeptor enthält und eines Cokatalysators, der aus einem Alkylaluminium und einem Elektronendonator besteht, dadurch gekennzeichnet, daß die Polymerisation in der Gasphase durchgeführt wird und daß der Elektronendonator ausgewählt wird aus Monoethern der Formel R'OR", wobei R'und R" gesättigte, lineare oder verzweigte Kohlenwasserstoffreste darstellen, die 1 bis 8 Kohlenstoffatome enthalten oder auch aus cyclischen Monoethern, bei denen das Sauerstoffatom einen Ring mit 4 bis 12 Kohlenstoffatomen bildet.

2. Verfahren nach Anspruch 1, dadurch gekennzeichnet, daß die Kohlenwasserstoffreste derartig am Ring substituiert sind, daß die Gesamtzahl der Kohlenstoffatome des cyclischen Ethers nicht größer als 16 ist.

3. Verfahren nach einem der Ansprüche 1 oder 2, dadurch gekennzeichnet, daß die Menge an eingesetztem Monoether bestimmt wird durch ein molares Verhältnis Ether zu Aluminium im Cokatalysator zwischen 1 und 1/100.

## Claims

1. A process for the polymerization of ethylene at a temperature lower than the melting point of the polymer or copolymer to be synthesized, allowing the production of linear polyethylene having a narrow distribution of molecular weight, in the presence of a catalyst formed by a catalytic component containing at least one transition metal, magnesium, a halogen and possibly an electron donor or acceptor and of a cocatalyst forced by an alkyl aluminium and an electron donor, characterized in that polymerization is performed in the gaseous phase and the electron donor is selected from the family of monoethers having the Formula R'OR", where R' and R" are saturated, linear or branched hydrocarbon radicals containing 1 to 8 carbon atoms, or cyclic monoethers, the oxygen forming a ring comprising 4 to 12 carbon atoms.

2. A process according to claim 1, characterized in that hydrocarbon radicals are substituted on the ring, the total number of carbon atoms of the ring ether not exceeding 16.

3. A process according to one of claims 1 or 2, characterized in that the quantity of monoether used is defined by an ether/ aluminium molar ratio of the cocatalyst of between 1 and 1/100.